# FASCICULE DE BREVET EUROPEEN

(11) **EP 2 357 136 B1**
(45) Date de publication et mention de la délivrance du brevet: **22.08.2012**
(21) Numéro de dépôt: 11153479.8
(22) Date de dépôt: 07.02.2011
(51) Int. Cl.: B65B 7/28, B65B 31/02, B65B 55/02, A23L 3/00, A23B 7/005, A23B 7/148, A23L 3/3418

(54) **Tête d'injection vapeur et eau froide pour la réalisation de conditionnement sous vide en continu de produits alimentaires.**
Dampf- und Kaltwassereinspritzkopf zur fortlaufenden Vakuumverpackung von Lebensmittelprodukten
Steam and cold-water injection head for continuous vacuum packaging of food products.

(30) Priorité: 12.02.2010 FR 1000602
(43) Date de publication de la demande: 17.08.2011
(73) Titulaire: Sodetech, 33260 La Teste de Buch (FR)
(72) Inventeur: Le Goff, Suzanne, 47300 Pujols (FR); Larroche, Brigitte, 75020 Paris (FR)
(74) Mandataire: Ravina, Bernard

(56) Documents cités:
- EP-A1- 2 226 252
- FR-A- 1 434 926
- FR-A1- 2 686 059
- US-A- 1 931 911

## Description

La présente invention concerne une tête d'injection vapeur et eau froide pour la réalisation de conditionnement sous vide en continu de produits alimentaires qui peuvent être stérilisés ou pasteurisés dans un récipient rigide.

Une telle technologie est décrite dans la demande de brevet EP 2 226 252 A1 (publiée le 08/09/2010) qui est basée sur les points suivants :
Le récipient rigide est du type dont la fermeture s'effectue par un couvercle métallique exempt de moyens d'accrochage et pourvu d'un joint élastique, ou souple, ledit couvercle étant maintenu par un vide poussé.
Le récipient du type pot ou boîte reçoit un produit préparé prêt à la consommation, préalablement dégazé, pasteurisé ou stérilisé à haute température, ce qui permet une stérilisation ultra rapide du produit en limitant le temps de cuisson.
Le produit ramené à une température de l'ordre de 90/92 degrés centigrades pour un refroidissement partiel pour le stériliser, et maintenu à cette température pour le pasteuriser, est emboîté dans le récipient ou conteneur par une machine automatique sous atmosphère de vapeur surchauffée.

Les récipients sont ensuite amenés dans une machine capsuleuse automatique par un circuit sous atmosphère de vapeur surchauffée, ce qui assure le maintien de la stérilité.

La demande de brevet EP 2 226 252 A1 enseigne que la mise sous vide est constituée essentiellement en ce que le couvercle est maintenu à distance du récipient préalablement rempli, que de la vapeur surchauffée est injectée à une température, un débit et/ou un temps qui permette la stérilisation du couvercle et de l'espace de tête du récipient en chassant également l'air et les incondensables, notamment l'oxygène, ce qui permet de réaliser le vide, que le récipient est ensuite pressé contre le couvercle ou inversement et qu'un jet d'eau froide est envoyé sur le couvercle, ce qui provoque un refroidissement rapide du couvercle, la condensation immédiate de la phase vapeur dans l'espace de tête du récipient et la mise sous vide profond.

La tête d'injection vapeur et eau froide selon la revendication 1 et le procédé de mise en oeuvre selon la revendication 8 participent à ce processus innovant.

A cet effet, selon l'invention, la tête d'injection vapeur et eau froide pour installation de conditionnement sous vide en continu de produits alimentaires pasteurisé et/ou stérilisé dans un récipient rigide dont la fermeture s'effectue par un couvercle exempt de moyens d'accrochage et pourvu d'un joint élastique, maintenu par un vide poussé obtenu par une projection de vapeur surchauffée suivie, après apposition du couvercle métallique sur le récipient suivi d'une projection d'eau froide, la tête étant une cloche dont l'évidement reçoit dans une chambre en partie haute :
- un mandrin doté d'aimants de retenue du couvercle, ledit mandrin étant doté d'un perçage en relation avec un conduit d'amenée d'eau froide, ce qui permet la circulation de l'eau froide sur le couvercle,
- ladite partie haute étant dotée d'au moins un conduit d'injection de vapeur dans la chambre en haut de cloche à partir d'un premier circuit d'alimentation, - en partie basse de la cloche sous le mandrin, est montée dans une chambre de distribution une couronne annulaire d'injection vapeur en relation par des orifices avec une chambre annulaire de distribution vapeur à partir d'un second circuit vapeur alimentant la chambre de distribution qui alimente les deux circuits vapeur à l'intérieur de la tête.

Suivant une autre caractéristique de l'invention, le procédé de mise en oeuvre de la tête d'injection vapeur et eau froide selon la revendication 1 se caractérise en ce que :
- la tête d'injection avant l'arrivée du récipient reçoit une injection vapeur pour deux circuits :
   - par le premier circuit une injection vapeur dans la chambre en haut de cloche qui a pour effet de chasser l'air de cette zone de la tête,
   - par le deuxième circuit en partie basse au niveau de la couronne est réalisée une injection vapeur qui permet de chasser tout gaz autre que la vapeur surchauffée de la cloche que constitue la tête vapeur.

La tête vapeur ayant reçu la préparation précitée, le récipient muni de son couvercle métallique est placé sur un piston et son col est introduit dans la cloche.

Sous l'action des aimants, le couvercle est soulevé du col du récipient et positionné sur le mandrin, ce qui permet grâce à la couronne d'opérer une injection vapeur dans l'espace de tête du récipient qui, par ce balayage, élimine la totalité des gaz incondensables. Un piston pousse ensuite le récipient au contact de son couvercle en compressant le joint et par ce même mouvement est provoquée l'ouverture du circuit d'eau froide déversée sur le couvercle et l'arrêt de l'injection vapeur, l'ouverture du circuit d'eau froide provoque la condensation de la vapeur contenue dans l'espace de tête du récipient et la mise sous vide très rapide, et de ce fait le refroidissement du produit par évaporation condensation, la descente de pression provoquant l'ébullition du produit et l'évaporation condensation.

D'autres avantages et caractéristiques de l'invention apparaîtront à la lecture de la description ci-après d'une forme de réalisation donnée à titre d'exemple non limitatif et illustrée par les dessins joints dans lesquels :
- la figure 1 est une vue générale en perspective de la tête vapeur selon l'invention,
- les figures 2 et 3 sont des vues en coupe de la tête suivant des axes différents,
- les figures 4 et 5 sont des vues du mandrin selon des axes différents,
- la figure 6 est une vue de la couronne de distribution vapeur,
- la figure 7 est une vue en coupe du mandrin avec le circuit d'eau froide.

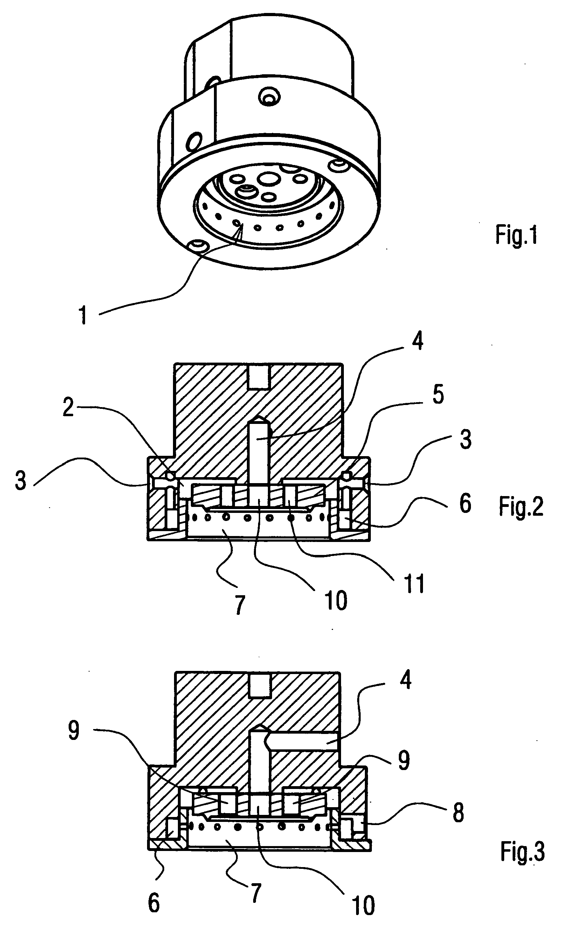

Telle que représentée en figure 1, la tête d'injection vapeur et eau froide selon l'invention pour installation de conditionnement sous vide en continu de produits alimentaires pasteurisés ou stérilisés a une forme sensiblement cylindrique et présente un évidement inférieur 1 formant une cloche dont une partie haute A est de diamètre inférieur à la partie basse B.

L'évidement 1 présente en partie haute une chambre 2 de réception de vapeur à partir d'au moins un conduit 3 d'injection.
Sur la figure 2, on distingue deux conduits 3 d'injection de vapeur.

Un conduit 4 (figure 3) alimente la chambre 2 en eau froide.

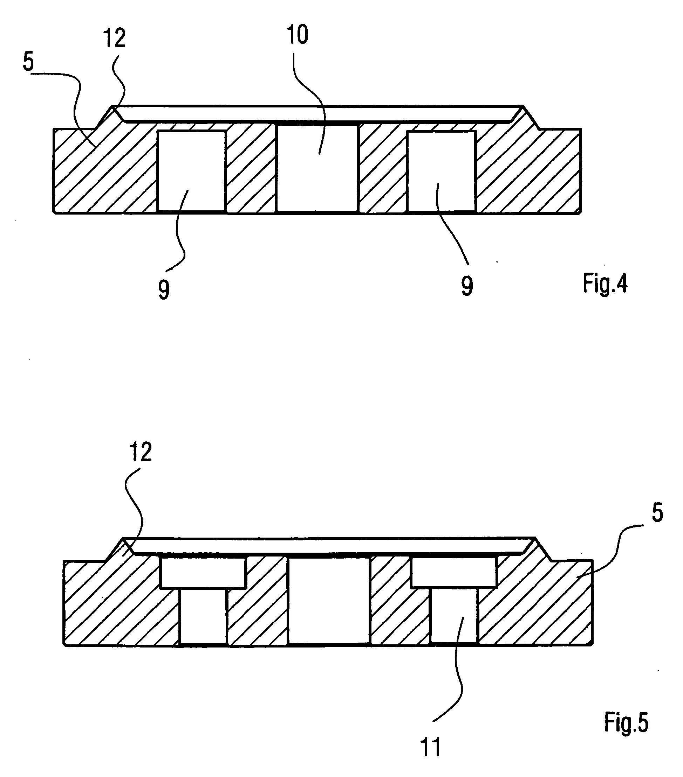

Dans la chambre 2 est disposé un mandrin 5 ayant la forme d'un disque vu plus en détail en figures 4 et 5.

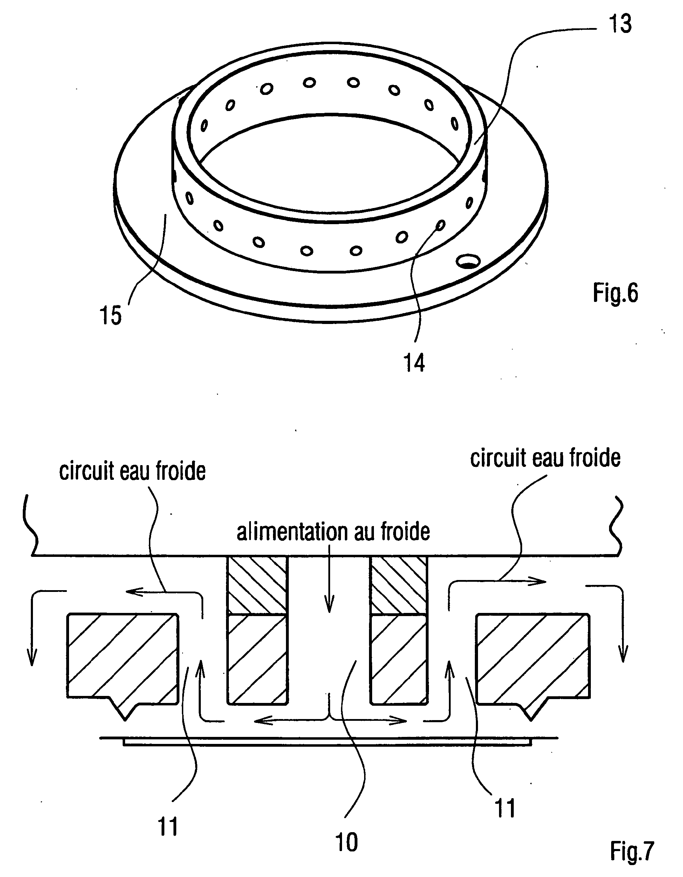

La chambre 6 est dotée d'au moins un orifice 8 de sa paroi d'alimentation vapeur.
Dans la chambre 6 est disposée sous le mandrin 5 une couronne annulaire 7 représentée plus en détail en figure 6.
Le mandrin 5 reçoit des aimants permanents 9 de retenue du couvercle dont la fonction sera explicitée plus loin.

Le même mandrin est doté de perçages traversant de passage d'eau froide dont un central 10 en relation directe avec l'arrivée 4 interne au corps de la tête et plusieurs 11 périphériques d'évacuation de l'eau froide.

Le mandrin 5 présente sur sa face inférieure une nervure circulaire 12 de centrage du couvercle.

La couronne d'injection vapeur (figure 6) de forme annulaire présente une partie supérieure tubulaire 13 dotée d'orifices 14 de passage de la vapeur et d'un anneau 15 inférieur périphérique plan de fixation à la cloche.

Le procédé de mise en oeuvre de la tête selon l'invention est le suivant :
La tête d'injection vapeur, avant l'arrivée du récipient muni de son couvercle, reçoit une injection vapeur par deux circuits :
   - par le premier circuit 3, une injection vapeur dans la chambre 2 en haut de la cloche qui a pour effet de chasser l'air de cette zone de la tête ;
   - par un deuxième circuit 8 en partie basse, une injection vapeur est réalisée dans la chambre 6 au niveau de la couronne 7 qui permet de chasser tout gaz autre que la vapeur surchauffée de la cloche que constitue la tête vapeur.

Le temps de préparation de la tête vapeur, avant l'arrivée du conteneur, doit être suffisant pour que l'atmosphère de vapeur à l'intérieur de la cloche soit à une température de l'ordre de 125°.

L'importance d'alimenter la tête vapeur en vapeur surchauffée vient du fait qu'il faut éliminer de l'intérieur de la cloche que forme la tête toute vapeur incondensable.
La vapeur surchauffée à 125° est beaucoup plus légère que l'air qu'elle remplace dans la cloche, l'air se trouve renvoyé vers le bas et est totalement éliminé de la cloche que forme la tête.
La tête vapeur ayant reçu la préparation ci-dessus, le récipient non représenté muni de son couvercle est placé sur un piston non représenté et son col est introduit dans la cloche, sous l'action des aimants 9 du mandrin 5, le couvercle métallique est soulevé du col du récipient et plaqué contre le mandrin, ce qui permet grâce à la couronne 7 perforée d'opérer une injection de vapeur surchauffée dans l'espace de tête du récipient qui en élimine la totalité des gaz incondensables, le piston pousse ensuite le récipient au contact de son couvercle en compressant le joint sous l'action d'un ressort non représenté qui maintient le conteneur au contact et par ce même mouvement du piston est provoquée l'ouverture du circuit d'eau froide déversé sur le couvercle, à travers le mandrin, et l'arrêt de l'injection vapeur.

L'ouverture du circuit d'eau froide provoque la condensation de la vapeur contenue dans l'espace de tête du récipient et la mise sous vide rapide de celui-ci.

La figure 7 représente le circuit d'eau froide amené par le conduit 4 de la cloche ; l'eau froide par le perçage 10 vient au contact du couvercle et est évacuée par les perçages 11.
Les aimants 9 tiennent le mandrin 5 à distance de la tête.
Le mandrin 5 et la couronne 7 sont fixés à la tête de toute manière connue par exemple par des vis.

L'ensemble de ces opérations successives nous ouvre la possibilité de refroidir tous produits pâteux et fortement pâteux comme les purées de légumes dans des temps extrêmement courts.
Compte tenu que l'on peut obtenir un vide de 850 millibar négatif (voire plus) soit 150 millibar absolu, il est possible de descendre en un temps record la température de 92/95°C à la température d'ébullition à cette pression, soit 60°C environ ; ceci permet une amélioration considérable de la qualité des produits, respect des arômes, des vitamines et des sels minéraux, et permet ce qui était impossible à ce jour, la mise en conteneur fermé sous vide, de purées diverses de légumes.

Jusqu'à ce jour, le refroidissement par conduction très lent en produits pâteux et peu conducteurs, et non par évaporation condensation rendait impossible la mise en boîte ou bocal de ces produits.

Au-delà de l'énorme amélioration de la qualité de ces produits, l'économie d'énergie par rapport au surgelé est considérable et la qualité de conservation très supérieure.

Il est également intéressant d'utiliser cette technique pour des produits sucrés à base de fruits, compotes et confitures, qui sont des produits à PH bas, pasteurisables, ce qui permet un refroidissement très rapide qui limite la cuisson des fruits, la caramélisation des sucres et de ce fait, conserve beaucoup mieux les arômes.

## Revendications

1. Tête d'injection vapeur et eau froide pour installation de conditionnement sous vide en continu de produits alimentaires pasteurisé et/ou stérilisé dans un récipient rigide dont la fermeture s'effectue par un couvercle métallique exempt de moyens d'accrochage et pourvu d'un joint élastique maintenu par un vide poussé obtenu par une projection de vapeur surchauffée suivie, après apposition du couvercle sur le récipient, d'une projection d'eau froide, la tête étant une cloche qui permet de faire succéder l'injection vapeur et l'injection d'eau froide sous la protection de ladite cloche tout en maintenant le conteneur et son couvercle en contact et sous pression de ressorts, dans laquelle
- l'évidement de la cloche en partie haute reçoit un mandrin (5) doté d'aimants (9) de retenue du couvercle, ledit mandrin étant doté d'un perçage (10) en relation avec un conduit d'amenée d'eau froide (4),
- ladite partie haute est dotée d'au moins un conduit d'injection de vapeur (3) dans la chambre en haut de cloche à partir d'un premier circuit d'alimentation,
- en partie basse de la cloche sous le mandrin, est montée dans une chambre (6) de distribution de vapeur une couronne annulaire (7) d'injection vapeur en relation par des orifices avec une chambre annulaire de distribution vapeur alimentée par au moins un orifice d'alimentation vapeur à partir d'un second circuit vapeur alimentant la chambre de distribution qui alimente les deux circuits vapeur à l'intérieur de la tête.

2. Tête d'injection selon la revendication 1 **caractérisée en ce que** le mandrin (5) est doté d'un perçage (10) d'arrivée d'eau froide depuis le conduit (4) de la tête sur le couvercle et de perçages (11) d'évacuation de l'eau froide.

3. Tête d'injection selon les revendications 1 et 2 **caractérisée en ce que** le mandrin (5) présente à sa base une nervure circulaire (12).

4. Tête d'injection selon les revendications 1 et 2 **caractérisée en ce que** sous le mandrin (5) dans une chambre inférieure (6) de la tête est montée une couronne (7).

5. Tête d'injection selon les revendications 1 et 4 **caractérisée en ce que** la chambre (6) est alimentée en vapeur par le deuxième circuit (8).

6. Tête d'injection vapeur **caractérisée en ce que** la couronne (7) présente une partie supérieure tubulaire (13) dotée d'orifices de passage de la vapeur.

7. Tête d'injection selon la revendication 6 **caractérisée en ce que** la couronne (7) présente un anneau (15) inférieur périphérique plan de fixation à la cloche.

8. Procédé de mise en oeuvre de la tête d'injection vapeur et eau froide selon la revendication 1 **caractérisé en ce que** :
- la tête d'injection avant l'arrivée du récipient muni de son couvercle reçoit une injection vapeur par deux circuits :
* par le premier circuit une injection vapeur dans la chambre en haut de cloche qui a pour effet de chasser l'air de cette zone de la tête,
* par le deuxième circuit en partie basse une injection vapeur au niveau de la couronne (7) est réalisée une injection vapeur qui permet de chasser tout gaz incondensable autre que la vapeur surchauffée de la cloche que constitue la tête vapeur,
la tête vapeur ayant reçu la préparation précitée, le récipient muni de son couvercle est placé sur un piston et son col est introduit dans la cloche par le piston ; sous l'action des aimants (9) du mandrin (5), le couvercle métallique est soulevé du col du récipient et positionné sur le mandrin, ce qui permet grâce à la couronne (7) perforée d'opérer une injection vapeur dans l'espace de tête du récipient qui par le balayage produit en élimine la totalité des gaz incondensables, le piston pousse ensuite le récipient au contact de son couvercle en compressant le joint et par ce même mouvement est provoquée l'ouverture du circuit d'eau froide déversée sur le centre du couvercle, et l'arrêt de l'injection vapeur, l'ouverture du circuit d'eau froide provoque la condensation de la vapeur contenue dans l'espace de tête du récipient et la mise sous vide très rapide.

## Claims

1. Steam and cold water injection head for continuous installation of vacuum packaging of pasteurised and/or sterilised foodstuffs in a rigid container closed with a metallic lid without hooking devices and fitted with an elastic seal held in place by high vacuum obtained by discharge of overheated steam followed, after fitting of the lid onto the container, by cold water spraying, the head being a bell used for injection, first of steam, and then of cold water, under the protection of said bell, while keeping the container and its lid in contact and under pressure from springs, and in which:
- the recess in the upper part of the bell receives a mandrel (5) fitted with lidholding magnets (9), said mandrel having a drilled hole (10) connected to a cold water supply pipe (4),
- said upper part has at least one steam injection pipe (3) in the chamber at the top of the bell starting from a first supply system,
- in the lower part of the bell, under the mandrel, in a steam chamber (6), is mounted a steam injection annular ring (7) connected through orifices to a steam annular chamber fed by at least one steam supply orifice from a second steam system feeding the steam chamber which feeds the two steam systems inside the head.

2. Injection head according to claim 1 **characterised in that** the mandrel (5) is fitted with a drilled cold water inlet (10) from the head pipe (4) on the lid and with drilled cold water outlets (11).

3. Injection head according to claims 1 and 2 **characterised in that** the base of the mandrel (5) has a circular rib (12).

4. Injection head according to claims 1 and 2 **characterised in that** under the mandrel (5), a ring (7) is mounted in a lower chamber (6) of the head

5. Injection head according to claims 1 and 4 **characterised in that** steam is supplied to the chamber (6) through the second system (8).

6. Steam injection head **characterised in that** the ring (7) has a tubular upper part (13) fitted with steam orifices.

7. Injection head according to claim 6 **characterised in that** the ring (7) is fitted with a flat lower peripheral rim (15) for fastening to the bell.

8. Method for using the steam and cold water injection head according to claim 1 **characterised in that**:
- the injection head before the inlet of the container fitted with its lid receives a steam injection through two systems:
* through the first system, a steam injection into the chamber at the top of the bell which drives the air out of this area of the head,
* through the second system, in the lower part, steam is injected at the ring (7) to drive out any non-condensable gas other than the overheated steam in the bell making up the steam head,
the steam head having received the above-mentioned preparation, the container fitted with its lid is placed on a piston and its neck is inserted into the bell by the piston; the metallic lid is lifted off the neck of the container by the magnets (9) on the mandrel (5) and positioned on the mandrel, which makes it possible, using the perforated ring (7), to inject steam into the container head space which fully flushes out all non-condensable gases; the piston then pushes the container into contact with its lid by compressing the seal, and this same motion causes the cold water system to be opened, the water to be poured on the centre of the lid, and the steam injection to be stopped; the opening of the cold water system causes the condensation of the steam contained in the head space of the container and very quickly creates a vacuum.

## Patentansprüche

1. Dampf- und Kaltwasser-Spülkopf für durchlaufende Vakuum-Verpackungsanlagen für pasteurisierte und/oder sterilisierte Lebensmittel in steifen Behältern, die durch einen Metalldeckel ohne Verhakungsmittel jedoch mit elastischer Dichtung verschlossen werden, wobei der Deckel durch ein Feinvakuum gehalten wird, das durch einen Strahl Heißdampf gefolgt von einem Strahl kalten Wassers, nach dem Aufbringen des Deckels, erzeugt wird. Dabei ist der Spülkopf eine Glocke, die ermöglicht, unter dem Schutz der genannten Glocke die Dampf-Einspritzung und die Kaltwasser-Einspritzung aufeinander folgen zu lassen und gleichzeitig den Behälter und dessen Deckel in Kontakt und unter Federdruck zu halten. In diesem Kopf
- erhält die Aussparung im oberen Teil der Glocke einen mit Magneten (9) bestückten Kern (5) zum Halten des Deckels, wobei der genannte Kern eine Bohrung (10) in Verbindung mit der Kaltwasser-Zuleitung (4) aufweist,
- Der genannte obere Teil enthält mindestens eine Dampf-Einspritzleitung (3) in der Kammer im oberen Glockenteil von einem ersten Versorgungskreis.
- Im unteren Teil der Glocke, unter dem Kern, ist in einer Dampf-Verteilungskammer (6) eine Ringkrone (7) für die Dampf-Einspritzung eingebaut, die über Öffnungen mit einer Dampf-Verteilungs-Ringkammer in Verbindung steht, welche durch mindestens eine Dampf-Versorgungsöffnung von einem zweiten Dampfkreis gespeist wird, der die Verteilungskammer speist, welche die beiden Dampfkreise im Inneren des Spülkopfes versorgt.

2. Spülkopf gemäß Anspruch 1, **dadurch gekennzeichnet, dass** der Kern (5) über eine Bohrung (10) für den Kaltwasserzulauf von der Leitung (4) des Spülkopfes auf den Deckel verfügt, sowie über Bohrungen (11) für die Kaltwasserableitung.

3. Spülkopf gemäß den Ansprüchen 1 und 2, **dadurch gekennzeichnet, dass** der Kern (5) an seiner Basis eine ringförmige Rippe (12) aufweist.

4. Spülkopf gemäß den Ansprüchen 1 und 2, **dadurch gekennzeichnet, dass** unter dem Kern (5), in einer unteren Kammer (6) des Spülkopfes, eine Krone (7) eingebaut ist.

5. Spülkopf gemäß den Ansprüchen 1 und 4, **dadurch gekennzeichnet, dass** die Kammer (6) durch den zweiten Kreis (8) mit Dampf versorgt wird.

6. Dampf-Spülkopf, **dadurch gekennzeichnet, dass** die Krone (7) einen oberen, röhrenförmigen Teil (13) aufweist, der mit Durchlassbohrungen für den Dampf ausgestattet ist.

7. Spülkopf gemäß Anspruch 6, **dadurch gekennzeichnet, dass** die Krone (7) einen unteren, umlaufenden, planen Ring (15) zur Befestigung an der Glocke aufweist.

8. Einsatzverfahren des Dampf- und Kaltwasser-Spülkopfes gemäß Anspruch 1, **dadurch gekennzeichnet, dass**
- der Spülkopf vor Ankunft des Behälters mit seinem Deckel eine Dampf-Einspritzung durch zwei Kreise erhält:
* über den ersten Kreis, eine Dampf-Einspritzung in die Kammer im oberen Glockenteil, welche die Luft aus diesem Teil des Kopfes verdrängt,
* über den zweiten Kreis im unteren Teil erfolgt eine Dampf-Einspritzung an der Krone (7), mit der jedes nicht kondensierbare Gas außer dem Heißdampf aus der Glocke verdrängt wird, die der Dampfkopf bildet.
Nachdem der Dampfkopf die vorgenannte Vorbereitung erhalten hat, wird der Behälter mit seinem Deckel auf einen Kolben gestellt und sein Hals wird vom Kolben in die Glocke eingeführt. Unter der Wirkung der Magnete (9) des Kerns (5), wird der Metalldeckel vom Behälterhals abgehoben und am Kern positioniert. Dadurch kann durch die perforierte Krone (7) Dampf in den oberen Behälterraum gespritzt werden, was durch das erzeugte Spülen alle nicht kondensierbaren Gase daraus entfernt. Danach schiebt der Kolben den Behälter gegen seinen Deckel und komprimiert die Dichtung. Dieselbe Bewegung führt zum Öffnen des Kaltwasserkreises auf die Deckelmitte und zum Abschalten der Dampf-Einspritzung. Das Öffnen des Kaltwasserkreises verursacht das Kondensieren des im oberen Behälterraumes enthaltenen Dampfes und das sehr schnelle Herstellen des Vakuums.
